# EUROPEAN PATENT SPECIFICATION

(11) **EP 3 698 420 B1**
(45) Date of publication and mention of the grant of the patent: **03.03.2021**
(21) Application number: 18726919.6
(22) Date of filing: 17.04.2018
(51) Int. Cl.: H01M 4/13, H01M 4/134, H01M 10/052, H01M 12/06, H01M 12/08

(54) **ADDITIVES AND METHODS TO ADD ADDITIVES IN A RECHARGEABLE NON-AQUEOUS LITHIUM-AIR BATTERY**
ADDITIVE UND VERFAHREN ZUR ZUGABE VON ADDITIVEN BEI EINEM WIEDERAUFLADBAREN NICHT-WÄSSRIGEN LITHIUM-LUFTAKKUMULATOR
LES ADDITIFS ET LES MÉTHODES POUR AJOUTER DES ADDITIFS DANS UNE BATTERIE NON-AQUEUSE RECHARGEABLE DE LITHIUM ET AÉRIENNE

(43) Date of publication of application: 26.08.2020
(73) Proprietor: Toyota Motor Europe, 1140 Brussels (BE); Katholieke Universiteit Leuven, 3000 Leuven (BE)
(72) Inventor: BARDÈ, Fanny, 1140 Brussels (BE); VANHOUTTE, Gijs, 3000 Leuven (BE); FRANSAER, Jan, 3000 Leuven (BE)
(74) Representative: Cabinet Beau de Loménie
(86) International application number: PCT/EP2018/059787
(87) International publication number: WO 2019/201431

(56) References cited:
- US-A1- 2007 117 007
- KOBAYASHI H ET AL: "Cathode Performance of Co-Doped Li2O with Specific Capacity (400 mAh/g) Enhanced by Vinylene Carbonate", JOURNAL OF THE ELECTROCHEMICAL SOCIETY ECS - ELECTROCHEMICAL SOCIETY USA, vol. 164, no. 4, 2017, pages A750-A753, XP002783311, ISSN: 0013-4651
- OKUOKA SHIN-ICHI ET AL: "A New Sealed Lithium-Peroxide Battery with a Co-Doped Li2O Cathode in a Superconcentrated Lithium Bis(fluorosulfonyl)amide Electrolyte", SCIENTIFIC REPORTS, vol. 4, 05684, 14 July 2014 (2014-07-14), pages 1-6, XP002783312, NATURE PUBLISHING GROUP ISSN: 2045-2322, DOI: 10.1038/srep05684 cited in the application

## Description

The present invention relates to a lithium-air non-aqueous battery, a process for discharging the battery and a discharge deposit obtained during the process.

### Background of the invention

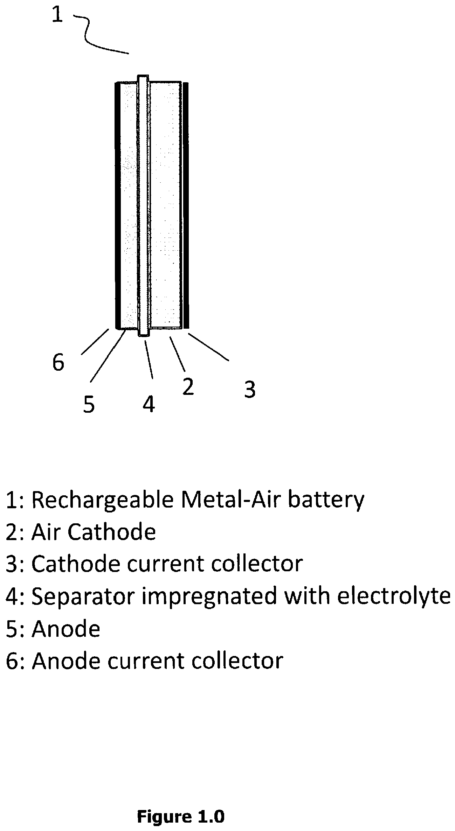

The invention is related to a rechargeable battery system in the form of a lithium-air non-aqueous battery. A schematic representation of a conventional (classical) Li-air battery configuration is represented in Figure 1.0.

Such a lithium-air non-aqueous battery comprises notably the following parts:
- metal anode (preferentially Li),
- non-aqueous electrolyte,
- air cathode (where O₂ is the main reactant) composed typically of carbon, binder and sometimes a catalyst.

The battery is not typically sealed, but in contact with a source of O₂ (an O₂ tank for example) or dried air or air.

The cathode is conceived as a support for O₂ reaction. The ideal reaction should be as follows (for a lithium-air battery):
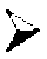 During discharge: O₂ is consumed to form the ideal product Li₂Oₓ 2 Li + x/2 O₂ → Li₂Oₓ
   This above reaction actually takes place in several steps in which the first one is related to the formation of O₂⁻ radicals as follows:

   O₂ + e⁻ → O₂⁻
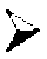 During charge: O₂ is released

   Li₂Oₓ → 2 Li + x/2 O₂

The non-aqueous electrolyte typically comprises a non-aqueous solvent in which a Li⁺ salt is dissolved, in a lithium-air battery. Ideally the discharge product formed is Li₂O_{x,} without the occurrence of side reactions. The Li₂Oₓ formed is a poor electronic conductor (or insulator) and this limits the amount of Li₂Oₓ that is formed on the cathode support.

In classical conditions, Li₂O₂ formed during the discharge by reaction of Li⁺ with O₂ radicals, is an insulator; therefore the amount of Li₂O₂ formed during the discharge is limited. Since the amount of Li₂O₂ formed during the discharge is directly proportional to the capacity or energy density of the battery, the fact that Li₂O₂ is an insulator is a problem.

As a further problem, since pure Li₂O₂ is an insulator it is difficult to decompose it, which implies a poor rechargeability of the battery. This low rechargeability gives rise to a low speed of charging, and higher overpotential to fully recharge the battery and thus a lower efficiency battery.

Work carried out in the same technical field as the invention includes the following references:
Prior Art 1: Kobayashi et al., "The Charge/Discharge Properties of Vinylene Carbonate-Treated Cobalt-Doped Lithium Oxide Cathode for Lithium Peroxide Batteries", ECS meeting abstract, 2016
Prior Art 2: Okuoka et al., "A New Sealed Lithium-Peroxide Battery with a Co-Doped Li2O Cathode in a Superconcentrated Lithium Bis(fluorosulfonyl)amide Electrolyte", Scientific Reports 4:5684, 2014, 1-6
Prior art 3: C. W. Monroe and D. J. Siegel, "How Dopants Can Enhance Charge Transport in Li2O2", Chemistry of Materials, pp. 839-847, 2014.

In above-referenced Prior Art 1, a Li-ion battery is disclosed constituted as follows:
- Cathode: (Li_{0.82}CO_{0.058□0.12})₂O containing Co-doped Li₂O prepared by ball milling of Li₂O and LiCoO₂ (□ represents Li⁺-site vacancy), the sample being mixed with carbon Ketjen Black (KB) and PTFE in a weight ratio of 75:25:5, with the mixture then being pressed on aluminum mesh. The fabricated electrode is then immersed in vinylene carbonate (VC) for 1 h and dried in vacuum.
- Anode: Li metal
- Electrolyte: 1M LiPF₆ in EC:DME (vol: 1:1), VC 5%vol
- Closed coin cell (no O₂, no air)

In this disclosure, a Li-ion battery was reported, not a lithium-air battery. Co is used as dopant, so that the active material is in effect a modified lithium cobalt oxide with a ratio dopant/Li of 0.1. The electrolyte here is a conventional one, very typical of Li-ion batteries. Further, there is only one electrolyte medium, not a catholyte on the one hand and a separate anolyte on the other hand.

In above-referenced Prior Art 2, a Li-ion battery is disclosed constituted as follows:
- Co-doped Li₂O cathode (Co/Li of 0.1) cathode prepared from Co₃O₄ and Li₂O pulverized together by ball milling (Rh₂O₃, IrO₂ can also be used instead of Co₃O₄). The co-doped Li₂O material was mixed with acetylene black, PTFE in a weight ratio of 45:50:5. The materials were then pressed on aluminium mesh current collector to form a positive electrode or cathode.
- Li metal anode pressed on Cu foil
- Super-concentrated 4 M LiFSA electrolyte in acetonitrile (again, not separated into catholyte and anolyte)
- No oxygen, no air (closed system under argon)

In this disclosure, a closed (sealed) battery system was reported, a modified lithium cobalt oxide was prepared in advance by ball milling, and forms part of the cathode. The ratio dopant/Li is 0.1.

Prior Art 3 provides theoretical calculations suggesting that doping at equilibrium level (ppm level) can enhance charge transport by shifting the balance of Li-ion vacancies and hole polarons. This mechanism can rationalize the improved rechargeability observed in Li-O₂ electrodes containing Co. The one-dimensional transport model was developed to calculate the quasi-steady state voltage drop associated with charge transport through doped Li₂O₂. Ni and Co are the only elements predicted to be good dopants for the Oxygen Evolution Reaction (charge process).

### Summary of the invention

In one aspect, the present invention relates to a lithium-air battery comprising:
- a negative electrode comprising a negative-electrode active material;
- a positive electrode capable of using oxygen as a positive-electrode active material; and
- at least one catholyte layer comprising a catholyte medium comprising a non-aqueous liquid phase solvent in contact with said positive electrode,
wherein the catholyte medium comprises a lithium salt and an additive in the form of a salt of a transition metal M, wherein:
M is selected from the group consisting of: Mn, Mo, Co, Ni, Cr, Fe, Cu, Zn, Zr, Nb, Ru, Ag, and
wherein the molar ratio M/Li in the catholyte medium is less than 0.1.

In preferred embodiments, the molar ratio M/Li in the catholyte medium is less than 0.01, more preferably less than 0.001, and still more preferably less than 0.0001. In preferred embodiments, the molar ratio M/Li in the catholyte medium is at least 10⁻⁶. In preferred embodiments, the concentration of lithium ions in the catholyte medium is between 0.02 and 1.5 M, more preferably between 0.05 and 1.2 M, still more preferably from 0.1 to 0.5 M, most preferably from 0.1 to 0.3 M. In preferred embodiments, the concentration of metal ions M in the catholyte medium is between 0.1 and 10 µM.

In the lithium-air battery of the invention, in generally advantageous embodiments, the catholyte layer, on the side of the catholyte layer opposite the said positive electrode, is in contact with a solid lithium ion conductor, a polymer membrane or an anode protection layer. The solid lithium ion conductor may be selected from the group consisting of: Li₇La₃Zr₂O₁₂ (garnet LLZO), Li₁₊ₓAlₓTi₂₋ₓ(PO₄)₃ (Nasicon-type LATP), Li_{1+x+y}AlₓTi₂₋ₓSi_{y}P₃-_{y}O₁₂, LiSICON (Li₂₊₂ₓZn₁₋ₓGeO₄), and Li_{1+x+3z}Alₓ(Ti,Ge)₂₋ₓSi_{3z}P_{3-z}O₁₂ (Ohara glass). A polymer membrane, if in contact with the catholyte layer, may comprise polyethylene oxide (PEO), and Li⁺ salts. In the latter possible embodiment, the polymer membrane must conduct Li⁺ ions and therefore it contains Li⁺ salts. This polymer membrane should preferably have a Li⁺ ionic conductivity as high as possible at room temperature as well as a high transference number (T_{Li+}), as close as possible to 1. Typical values characterizing such polymer membranes are: 10⁻⁴ S/cm and T_{Li+} > 0.5. Illustrative and non-limiting examples of appropriate polymer membranes in such a context are given by Porcarelli et al., Scientific Report, 6:19892 | DOI: 10.1038/srep19892. Where an anode protection layer is used, in contact with the catholyte layer, the anode may be lithium metal and the anode protection layer deposited thereupon may be LIPON or LISICON, and/or the anode and anode protection layer may constitute a lithium-protected electrode (LPE).

In the lithium-air battery of the invention, in generally advantageous embodiments, the transition metal M may be Mn, Mo or Co. The salt of transition metal M may advantageously contain an anion Z that is selected from the group consisting of: TFSI⁻, FSI⁻, BOB⁻, PF₆⁻, BF₄⁻, and ClO₄⁻. Preferred examples of salts of a transition metal M include a bis(trifluoromethylsulfonyl)imide salt of manganese or cobalt. In terms of solvent / ionic liquid media, in generally advantageous embodiments, the catholyte medium may contain DMSO, DME or DEME-TFSI or DEME-FSI or PP13TFSI or PP13FSI (PP13 is N-methyl-N-propylpiperidinium cation) or mixture of these.

In another aspect, the present invention relates to a process of discharge of a lithium-air battery as set out hereinabove, wherein:
- oxygen gas O₂ is provided to the positive electrode; and
- a metal-oxide discharge product doped with transition metal M is produced.

The oxygen gas may appropriately be supplied as purified oxygen, or in air or dried air.

In another aspect, the present invention relates to a metal-oxide discharge product doped with transition metal M obtained through a process of discharge as set out hereinabove.

### Brief description of the Figures

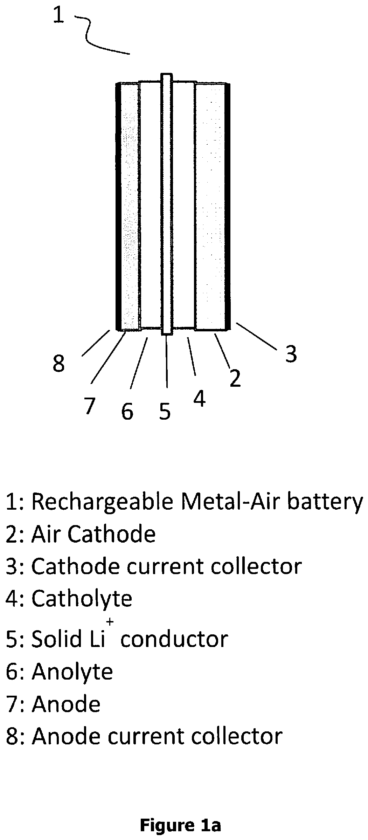

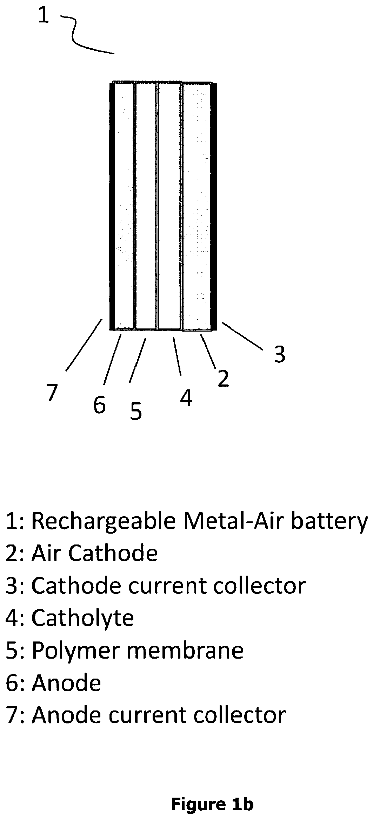

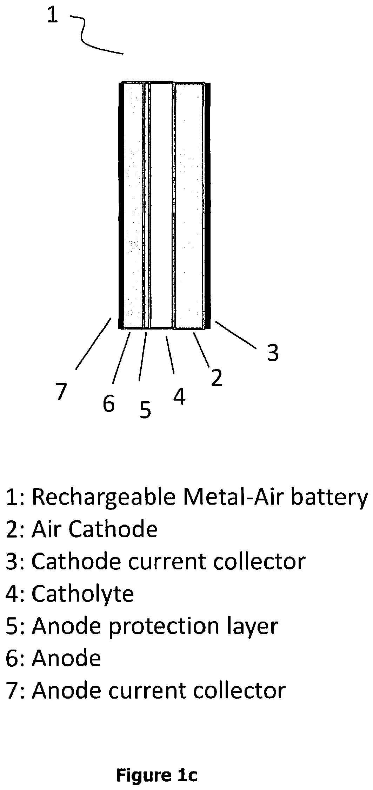

Figure 1.0 shows a general schematic diagram of a conventional lithium-air battery known in the prior art. Schematic representations of examples of lithium-air battery systems that may appropriately be used in the practice of the present invention are provided in attached Figures 1a to 1c. In appropriate lithium-air battery systems of the present invention, the (non-aqueous) electrolyte is separated into an anolyte on the anode side of the assembly and a catholyte on the cathode side. In Figure 1a, the layer separating catholyte and anolyte is a solid Li⁺ conductor. In Figure 1b there is a polymer membrane between the catholyte and the anode, and in Figure 1c an anode protection layer. Figures 1a to 1c represent variants of a battery cell, which may then appropriately be assembled in a battery pack. In embodiments according to the invention, the catholyte contains a dopant.

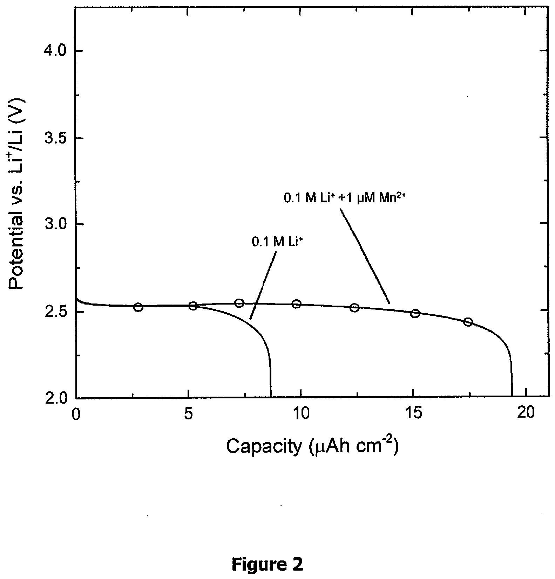

Figure 2 represents a comparison of the discharge curves of cells without dopant or with dopant. Figure 2 specifically shows a comparison of the discharge performance of a conventional cell having no dopant, with a cell of present invention with dopant prepared according to Example 1. The comparison is made between the blank cell discharged under oxygen at a constant rate of 100 µA cm⁻² with only 0.1 M Li⁺ (without Mⁿ⁺) and the cell containing 0.1 M Li⁺ together with the dopant (1 µM Mn²⁺).

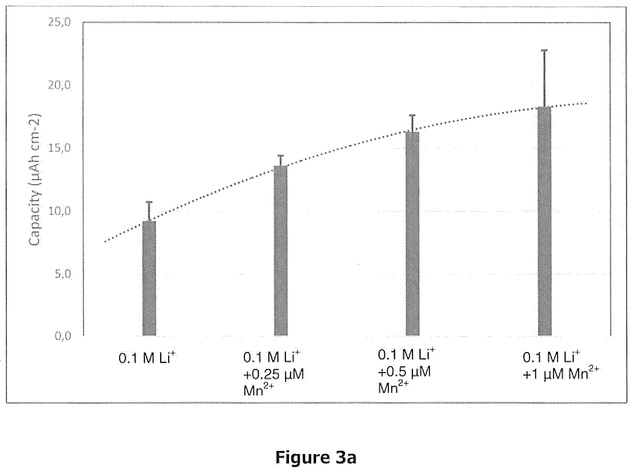

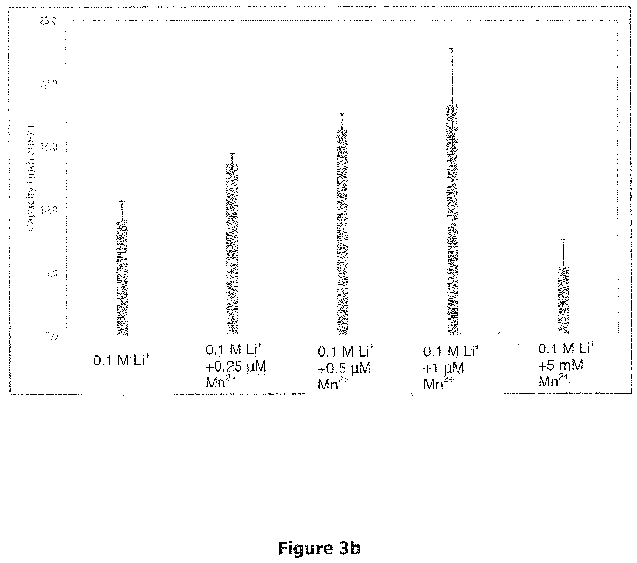

Figure 3 represents the discharge capacity as a function of the amount of Mn²⁺ dopant added in the electrolyte containing 0.1 M Li⁺ salt and O₂ dissolved. Figure 3(a) shows the influence of metal content on discharge capacity for Example 1 (Mn-based additive), measured at discharge rate of 100 µA cm⁻². It may be noted that the dotted trendline (polynomial) is added to the figure to show that it is not just a linear correlation, thus there is an optimal concentration and it is not simply that the higher the Mn²⁺ concentration, the higher the capacity. Figure 3(b) shows the influence of metal content on discharge capacity for Example 1 (Mn-based additive). It may be noted that a too high Mn salt concentration does not improve the discharge performance indicating that there is an optimum.

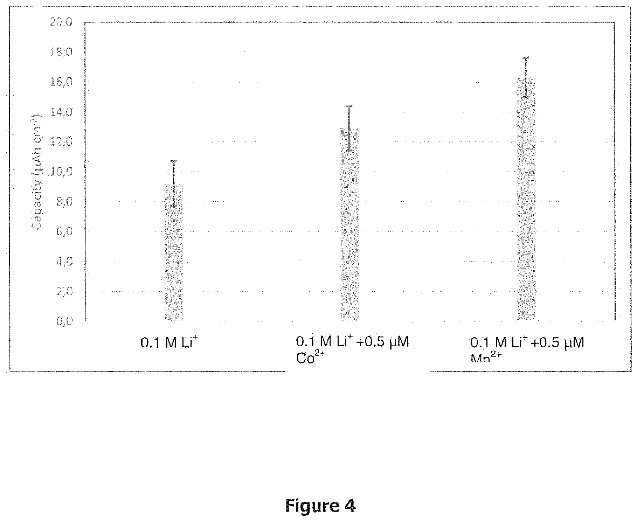

Figure 4 represents a comparison of the discharge capacity as a function of the type of metal (Co²⁺ or Mn²⁺) added to the electrolyte containing 0.1 M Li⁺ salt and with O₂ dissolved. The discharge capacity for Example 1 (Mn-based additive) and Example 2 (Co-based additive) are compared at the same concentration (measured at the same discharge rate of 100 µA cm⁻²).

### Detailed description of the invention

The present invention concerns a battery system of the type lithium-air non-aqueous battery. A lithium-air battery of the invention can be both used as primary or secondary (rechargeable) system.

Figures 1a to 1c are illustrative and non-limiting schematic embodiments of configurations of Li-air battery that are considered by the inventors to be appropriate in the practice of the invention. These configurations are considered to help to avoid a problem that may occur due to the additives used in the present invention. Specifically, in the present invention, it is proposed to add additives which are salts of metals (positively charged species). These salts are added to the electrolyte in order to improve certain battery performances. However, on account of the addition of such charged species to the electrolyte, positively charged species M⁺ may migrate to the negative electrode (Li anode) and electrodeposit there as M° which might enhance the formation of dendrites, potentially provoking a short circuit in the battery which would be then potentially unsafe. To avoid this potential problem, the inventors consider it preferable in the framework of the invention to use the metal salt additive in the catholyte in combination with certain particular types of Li-air battery element, notably: a protected anode (LPE), a two-compartment cell configuration, or a polymer protecting the Li.

In the schematic embodiment illustrated by Figure 1a, the anolyte and catholyte may be liquid or gel electrolytes or ionic liquid(s). It can also be that the catholyte is a liquid electrolyte and the anolyte is an ionic liquid or vice versa or any other combination. The anolyte and catholyte are separated by a solid Li⁺ conductor, which may be glass or ceramic but should be inorganic and oxide-based. Preferably, the solid Li⁺ conductor will not show high electronic conductivity. In more detail, a solid Li⁺ conductor to be used in a Li-air battery showing the configuration of Figure 1a will show one or more of the preferred features that are described below:
- a solid (in form of a membrane/pellet, not too brittle, thickness of membrane around 250 µm or thinner);
- which is a ceramic or a glass of a mixture of crystalline particles together with an amorphous glass phase;
- with a composition among the possibilities shown in the table below;
- showing Li⁺ ionic conductivity in the range > 10⁻⁷, > 10⁻⁶, preferably above 10⁻⁴ S/cm at room temperature;
- not showing electronic conductivity < 10⁻¹¹, preferably not < 10⁻¹⁰ S/cm;
- preferably stable in contact with Li metal (although in the presence of an anolyte buffer, this is not an absolute requirement)

A particularly preferred solid Li⁺ conductor in the present invention is (lithium-ion conductive crystal particles + amorphous glass phase), also known as Lithium Ion Conductive Glass Ceramics (LICGC™) or "OHARA glass" (cf. http://www.ohara-inc.co.jp/en/product/electronics/licgcsp01.html). The latter material is readily available commercially and not too brittle.

Inorganic solid Li-ion conductors are reviewed in P. Knauth, Solid State Ionics, 180 (2009) 911-916. The group of materials appropriate in the present invention consists mostly of inorganic materials (ceramic or glass) which are Li⁺ conductors but not electronic conductors.

**Table 1: Inorganic oxide solid Li-ion conductors**

| **Short name** | **Type** | **Typical composition** | **RT ionic conductivity (S/cm)** | **Compatible in contact with Li?** |
|---|---|---|---|---|
| Lithium Ion Conductive Glass Ceramics (LICGC™) 'OHARA plass'** | Lithium-Ion Conductive Crystal particles + amorphous glass phase | Li_{1+x+3z}Alₓ(Ti,Ge)₂₋ₓSi_{3z}P_{3-z}O₁₂ | 10⁻⁴ | No |
| LLTO | crystalline | Li₃ₓLa_{(2/23)}.ₓ□_{(1/3)2x} TiO₃ | 10⁻³ | tbc |
| LATP (Nasicon) | crystalline | Li_{1.3}Al_{0.3}Ti_{1.7}(PO₄)₃ LATP* (Schott) | 3×10⁻³ 2×10⁻⁴* | No |
| LLZO | Crystalline Garnet structure (100% cubic) | Li₇La₃ Zr₂O₁₂ Li₇La₃ Zr₂O₁₂*(Schott) | 3×10⁻³ 3×10^{-4*} | Yes |
| LISICON | crystalline | Li₁₄ZnGe₄O₁₆ | 10⁻⁶ | tbc |
| Garnet | crystalline | Li₆L a₂BaTa₂O₁₃ | 2.6×10⁻⁴ | tbc |
| Li-ion conductor-mesoporous oxide | crystalline | Lil-Al₂O₃ | 2.6×10⁻⁴ | tbc |
| LiPON | amorphous | Li_{2.88}PO₃.₇₃N Lithium phosphorus oxvnitride | 3.3×10⁻⁶ | tbc |

| | | | | |
|---|---|---|---|---|
| **Schott is a provider of LATP and LLZO* ***Ohara is a provider of LICGC AG-01 Membrane type.* | | | | |

In particularly preferred embodiments of the invention, with a configuration of Li-air battery according to Figure 1a, one or more of the following preferred features are present:
- a catholyte medium containing DMSO, DME or DEME-TFSI or DEME-FSI or PP13TFSI or PP13FSI (PP13 is N-methyl-N-propylpiperidinium cation) or a mixture of these;
- as anolyte, LiPF₆ or LiTFSI in a carbonate solvent such as PC, EC and/or DMC;
- lithium-ion conductive crystal particles + amorphous glass phase, i.e. "OHARA glass", as Li⁺ solid conductor.

In Figure 1b, the layer separating catholyte and anode is a polymer membrane. In preferred embodiments, polymer membrane (5) is a polyethylene oxide (PEO) membrane or another polymer material not showing significant electronic conductivity *per se,* and the membrane has to further contain a Li⁺ salt.

In Figure 1c, the layer separating catholyte and anode is an anode protection layer composed essentially of inorganic materials, in contrast to Figure 1b, where it is more composed of an organic (polymer) layer. A lithium protected electrode can be used in this configuration. In another example of this configuration, the anode is Li and the anode protection layer is LIPON or LISICON deposited on top (by any method, such as CVD, ALD).

It is considered that during the use of the lithium-air battery of the invention, there is formation *in situ* in the lithium-air battery of an M-doped discharge deposit, where M is the transition metal of the electrolyte additive consisting of a salt of anion Z of transition metal M, wherein the M-doped discharge deposit can (in principle) be represented with a formula M_{δ}Li₂O₂ for a lithium-air battery. More generally, for a lithium-air battery, the discharge deposit can be represented with a formula M_{δ}LiₓO_{y}, where preferentially x equals 2 and y equals 2.

In the present invention, the transition metal M is appropriately added in the form a salt Mⁿ⁺Zⁿ⁻, which is incorporated into the catholyte, the latter also containing a metal salt of the (non-transition) metal of the lithium-air battery, i.e. a Li⁺ salt, the salt being dissolved in an organic solvent/solvent mixtures or in an ionic liquid or a solvate ionic liquid (also called liquid metal salt). The Mⁿ⁺Zⁿ⁻ additive is preferably present only in the cathode-side (air electrode side) electrolyte of the lithium-air battery - this part of the electrolyte is the "catholyte".

In generally applicable embodiments of the invention, the Mⁿ⁺Zⁿ⁻ salt/additive should be soluble in the solvent of the electrolyte and should not react chemically with the solvent or any other part of the electrolyte medium.

In the operation of the invention, the amount of O₂ should be controlled and depends on the O₂ solubility in the electrolyte (which differs from solvent to solvent).

The *in situ* formation of an M-doped discharge deposit, with a possible formula M_{δ}Li₂O₂ for a lithium-air battery, is triggered by applying a potential E (Volt) or current i (A) to the metal battery which contains at least Li⁺ (for a lithium-air battery), Mⁿ⁺ salt and an oxygen source (such as O₂ or air).

The presence of the (transition metal) dopant M in the discharge deposit (which is believed to enhance its conductivity and therefore allow the amount of discharge deposit to be higher) results in an increase in discharge capacity or energy density of the Li-air battery, which is important for both primary and secondary systems. The expected enhanced conductivity also allows higher currents to pass through the layer at the same potential (without a high potential drop) and therefore the power density and cycling efficiency at higher rates increases.

Transition metal additives such as a salt Mⁿ⁺Zⁿ⁻, to be used in the invention, are preferably prepared / purchased in anhydrous form, and/or dried before addition to the electrolyte.

Concerning the transition metal M, in the present invention, this may be selected from the group consisting of: Mn, Ni, Co, Cr, Fe, Cu, Zn, Zr, Nb, Mo, Ru, Ag.

Among these transition metals M, Mn is most preferred, Mo is the second most preferred, and Co is the third most preferred.

The component Z, a ligand / anion to form a salt with transition metal M, is preferably one of the following
Z is TFSI⁻, also called bis(trifluoromethylsulfonyl)imide or bistriflimide
Z is FSI⁻, also called bis(fluorosulfonyl)imide ([(FSO₂)2N]⁻)
Z is BOB⁻,
Z is PF₆⁻,
Z is BF₄⁻, or
Z is ClO₄⁻.

The BOB anion has the following structure, shown here for the LiBOB salt:

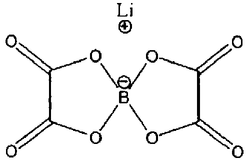

Specific examples of additives that can be used in the present invention thus include:
- Manganese bis(trifluoromethylsulfonyl)imide Mn(N-(SO₂-CF₃)₂)₂ available commercially from Alfa Aesar, CAS: 207861-55-0
- Nickel bis(trifluoromethylsulfonyl)imide Ni(N-(SO₂-CF₃)₂)₂ available commercially from Alfa Aesar Alfa Aesar - CAS: 207861-63-0

Further, metal salts can be obtained by syntheses according to "Metal bis-triflimide compounds and the methods for synthesis of metal bis-triflimide compounds" as reported by M. Earle and al. in the patent application WO 02/072260 A2.

Other specific salts that can be used include: silver bis(trifluoromethylsulfonyl)imide: AgTFSI (CAS 189114-61-2); nickel tetrafluoroborate hydrate: Ni(BF₄)₂.6H₂O; manganese perchlorate Mn(ClO₄)₂.xH₂O, available from Sigma Aldrich in a hydrated form (CAS 698999-57-4). It is highly advantageous to dry these salts before they are dissolved in any electrolyte medium, such as catholyte or anolyte.

In the present invention, it is possible to add just one additive in the form of a salt of a transition metal M with a ligand / anion Z, or several such metal salts could be added simultaneously to the electrolyte.

Without wishing to be bound by any particular theory, adding an additive M in the form of a salt Mⁿ⁺ in the electrolyte in contact with the cathode side (air electrode) of a Li-air battery (also called catholyte) is expected to act as a dopant to form the M-doped discharge deposit with (ideal) formula M_{δ}Li₂O₂. The presence of the dopant M in a small quantity δ in the discharge deposit is believed to enhance its conductivity and therefore allow the amount of discharge deposit to be higher, which is thought to result in an increase in discharge capacity or energy density of the Li-air battery. The presence of the dopant M in a small quantity δ in the discharge deposit may also result in a faster process of charge, and result in a lower overpotential required for the decomposition of the discharge deposit, so that improved energy efficiency will be observed. It is preferred that the additive(s) be added only to the catholyte part, in order to avoid the deposition of metal M (Co°, Ni°, Mn°...) at the anode side (which is preferentially Li). It should be noted that if such Co metal particles, for example, were to be deposited on the Li anode, this would favor the growth of lithium dendrites and generate a potential short circuit problem. For this reason, the Li-air battery configurations shown schematically in Figures 1a, 1b and 1c are preferred in the practice of the present invention.

In the lithium-air battery of the present invention, the negative electrode (which may also be referred to as "anode" hereinafter) comprises at least an anode active material (which may also be referred to as "negative electrode active material" hereinafter). As the anode active material, general anode active materials for metal batteries such as lithium batteries can be used and the anode active material is not particularly limited. In general, the anode active material is able to store/release a metal ion (Li⁺). Specific anode active materials are, for example, metals such as Li, alloys, oxides and nitrides, and carbonaceous materials.

Specific anode active materials for rechargeable lithium-air batteries are, for example, a lithium metal, lithium protected anodes, lithium alloys such as a lithium-aluminum alloy, a lithium-magnesium alloy, a lithium-indium alloy, a lithium-tin alloy, a lithium-lead alloy and a lithium-silicon alloy, metal oxides such as a tin oxide, a silicon oxide, a lithium-titanium oxide, a niobium oxide and a tungsten oxide, metal sulfides such as a tin sulfide and titanium sulfide, metal nitrides such as a lithium-cobalt nitride, a lithium-iron nitride and a lithium manganese nitride, and carbonaceous materials such as graphite. Of these, lithium metal is preferred. In the present invention, Li metal is a preferred anode active material if it is used in Li-air battery configurations shown schematically in Figures 1a, 1b and 1c. Otherwise, in the event that a configuration like the one drawn shown schematically in Figure 1.0 were to be used, a lithium protected anode (LPE) would be preferred. In this configuration, the catholyte forms part of the general electrolyte (in the separator (4)), so that there is no distinct "catholyte layer", or "catholyte" separate from an anolyte.

By "lithium-protected anode", reference is made here for example (but is not limited to) to a "Lithium Protected Electrode" (LPE) as described by Visco et al. (Polyplus). Usually the Li is covered by a solid electrolyte, for example LISICON. LISICON is an acronym for Lithium Super Ionic CONductor which refers to a family of solids with the chemical formula Li₂₊₂ₓZn₁₋ₓGeO₄.

Between the LiSiCON and the Li metal, there is usually an interlayer (for example consisting of CU₃N/Li₃N). In LPE systems, Li metal can be attached directly to one side of LiSiCON material, or alternatively a small amount of solvent containing a Li salt electrolyte may be added between the LiSiCON material and the Li metal to ensure Li ionic conductivity. Such materials have been described in, for example, US 7 282 295, US 7 491 458. LiSiCON materials have also been described in Nature Materials, 10, 682-686 (2011).

When a metal, alloy or the like in the form of foil or metal is used as the anode active material, it can be used as the anode itself.

The anode is required to contain at least an anode active material; however, as needed, it can contain a binder for fixing the anode active material. The type and usage of the binder are the same as those of the air cathode described hereinafter, so that they will not be described here.

In general, an anode collector is connected to the anode, which collects current from the anode. The material for the anode collector and the shape of the same are not particularly limited. Examples of the material for the anode collector include stainless steel, copper, nickel, carbon and the like. Examples of the form of the anode collector include a foil form, a plate form, a mesh (grid) and a foam form.

In the lithium-air battery of the present invention, the positive electrode uses oxygen as a positive-electrode active material. Oxygen serving as the positive-electrode active material may be contained in air or oxygen gas.

In the lithium-air battery of the present invention, the positive electrode may be a component in which the redox reactions are supported on a carrier. An example of the carrier is carbon. Examples of carbon include carbon blacks, such as Ketjen Black, acetylene black, channel black, furnace black, lamp black, and thermal black; graphite, such as natural graphite, e.g., scaly graphite, artificial graphite, and expanded graphite; activated carbon from charcoal and coal; carbon foam; carbon fibers obtained by carbonizing synthetic fibers and petroleum pitch-based materials; carbon nanofibers; molecular carbon such as fullerenes; and tubular carbon, such as carbon nanotubes. Modified carbons such as N-doped carbon may also be used. Graphene or reduced Graphene Oxide (rGO) may also be used.

Positive electrode materials can also be used in a lithium-air battery of the present invention based on materials other than carbon. For example, positive electrode materials based on metal foam, stable and conductive metal oxides, or steel, could be used.

In the present invention, where carbon is used, it is preferably a porous material in the form of a powder and preferably has a high specific surface area of 20 to 2000 m²/g, preferably 60 to 2000 m²/g and most preferably 60 to 1500 m²/g. For example, carbon may be used upon which a treatment is performed by a general method to increase porosity or surface area, followed by another treatment to increase the wettability. Examples of the commercial carbon products which can be used in the present invention include the KS series, SFG series, Super P series and Super S series available from TIMCAL Ltd., activated carbon products available from Norit, Black Pearl and AB-Vulcan 72 available from Cabot, and KB-ECP and KB-ECP600JD available from KB International. Other examples of commercially available carbon include the WAC powder series available from Xiamen All Carbon Corporation, PW15-type, J-type and S-type Activated Carbons available from Kureha, and Maxsorb MSP-15 available from Kansai Netsu Kagaku.

Examples of the method for increasing the porosity, surface area and wettability of the carbon include physical activation or chemical activation. The chemical activation method includes, for example, immersing the carbon material in a strong alkaline aqueous solution (potassium hydroxide solution for example), in an acid solution (nitric acid or phosphoric acid for example) or in a salt (zinc chloride for example). This treatment can be followed (but not necessarily) by a calcination step at relatively low temperature (450°C to 900°C for example).

In the present invention, it is possible to use, for example, carbon black treated/activated by stirring it in concentrated HNO₃ for 3 days at room temperature. During the treatment/activation, the amount of acid versus carbon depends on the nature of the carbon and is preferably chosen to yield a slurry which is liquid enough to be stirred by means of a magnetic stirrer, etc. HNO₃ is preferable because it has an oxidizing effect on the carbon surface which affords polar groups on the surface that improves wettability. The carbon is then filtered and washed with deionized water until a neutral pH of the solution is obtained. In this case, it is not necessary to apply a post calcination step.

In addition, the carbon preferably has pores having a pore diameter of 5 nm or more, preferably 20 nm or more. The specific surface area of the carbon and the pore size can be measured by the BET method or the BJH method, for example. Furthermore, in general, the carbon preferably has an average particle diameter (primary particle diameter) of 8 to 350 nm, more preferably 30 to 50 nm. The average primary particle diameter of the carbon can be measured by TEM.

The carbon used in the present invention may show any one of the above-mentioned preferred ranges for specific surface area, pore diameter or particle diameter. Preferred carbon in the framework of the invention includes carbon showing a preferred range for just one of these types of physical feature, or carbon showing preferred ranges for two of the features, or carbon showing preferred ranges for each of the three features of specific surface area, pore diameter or particle diameter.

Among forms of carbon that have specifically found to be advantageous in the present invention are: Super P® Li (Timcal) showing a particle size of 40 nm and a specific surface area (determined by the Brunauer Emmet & Teller method) of 62 m²/g; Black Pearl® 2000 (from Cabot Corporation) showing a particle size of 12 nm and a Specific Surface Area (determined by the Brunauer Emmet & Teller method) of 1487 m²/g; Ketjen Black® EC-600JD (from AzkoNobel) showing a specific surface area (determined by the Brunauer Emmet & Teller method) of 1400 m²/g.

In the lithium-air battery of the present invention, the positive electrode may contain a conductive material, in addition to the carbon and non-carbon materials discussed above. Examples of such further conductive materials include conductive fibers such as metal fibers; metal powders, such as silver, nickel, aluminum powders; and organic conductive materials such as polyphenylene derivatives. These may be used separately or in combination as a mixture.

In the lithium-air battery of the present invention, the positive electrode may contain a binder. The binder is not particularly limited. The binder may be composed of a thermoplastic resin or a thermosetting resin. Examples thereof include polyethylene, polypropylene, polytetrafluoroethylene (PTFE), styrenebutadiene rubber (SBR), carboxymethylcellulose sodium salt (CMC) or sodium carboxymethyl cellulose showing various molecular weights or carboxymethylcellulose sodium (CMC and the sodium salt being supplied commercially notably by Sigma-Aldrich). It may be noted that CMC and SBR can be used together. CMC is a thickening agent, so it can be used alone, but preferentially in combination with SBR for example.

Other binders that may appropriately be used in the invention include tetrafluoroethylene-hexafluoropropylene copolymers, tetrafluoroethylene-hexafluoropropylene copolymers (FEP), tetrafluoroethylene-perfluoroalkyl vinyl ether copolymers (PFA), vinylidene fluoride-hexafluoropropylene copolymers, vinylidene fluoride-chlorotrifluoroethylene copolymers, ethylene-tetrafluoroethylene copolymers (ETFE resins), polychlorotrifluoroethylene (PCTFE), vinylidene fluoride-pentafluoropropylene copolymers, propylene-tetrafluoroethylene copolymers, ethylene-chlorotrifluoroethylene copolymers (ECTFE), vinylidene fluoride-hexafluoropropylene-tetrafluoroethylene copolymers, vinylidene fluoride-perfluoromethyl vinyl ether-tetrafluoroethylene copolymers, and ethylene-acrylic acid copolymers. Copolymers having sulfonate group-terminated perfluorovinyl ether groups attached to a poly(tetrafluoroethylene) backbone, such as those commonly referred to as Nafion®, may also be envisaged as polymer binder materials in the present invention. Furthermore, LIQUION™ may be envisaged for use as a binder in the present invention. LIQUION is a dispersion of Nafion® in a mixture of water and alcohol or in methanol only. This product is manufactured by Ion Power Inc, from Nafion® polymer. It is available in a 5 wt% by weight solid or 15 wt%, low and high equivalent weight polymers. LiTHION™ is preferred as binder. Lithion is a neutral dispersion containing 10-12 wt% Lithiated Nafion™ polymer in an isopropyl alcohol solvent (2-propanol). This product is manufactured by Ion Power Inc., from Nafion® polymer. These materials may be used separately or in combination as a mixture.

The relative weights of the binder or binders present to other solids, in particular to particulate carbon alone, may vary over a considerable range, for example between 0.001 to 2, preferably from 0.01 to 0.5 and more preferably from 0.01 to 0.25, still more preferably from 0.02 to 0.1. The weight of binder, in particular in the slurry used in the method of preparing an electrode material of the invention, may even thus be of the same order as the combined weights of particulate carbon or even greater, but in preferred embodiments, the amount of binder may be as little as 1% or 2% of the weight of these other solids. It is envisaged that for SBR used in combination with CMC, 1 wt% SBR + 1 wt% CMC could typically be used, with respect to the weight of particulate carbon, or weight of (particulate carbon + catalyst) if a catalyst is present, which corresponds to a ratio of 0.02 of the combined mass of binder materials with respect to (particulate carbon).

In the lithium-air battery of the present invention, the ion-conducting (electrolyte) media, denoted catholyte and anolyte, with the catholyte arranged between the positive electrode (cathode) and solid Li⁺ conductor while the anolyte is arranged between negative electrode (anode) and solid Li⁺ conductor, may appropriately be non-aqueous electrolytic solutions containing one or more organic solvents/ solvent mixtures or an ionic liquid or a solvate ionic liquid (also called liquid metal salt) and typically containing a salt. Non-limiting examples of the salt that can be used include known supporting electrolytes, such as inorganic lithium salts LiPF₆, LiClO₄, LiAsF₆, LiBF₄, and organic lithium salts such as Li(CF₃SO₃), LiN(CF₃SO₂)₂, LiN(C₂F₅SO₂)₂ and LiC(CF₃SO₂)₃. These salts may be used separately or in combination. The concentration of the salt is preferably in the range of 0.1 to 2.0 M and more preferably 0.1 to 1.2 M.

Additives may be added to the electrolyte medium to enhance lithium ion dissolution, such as TPFPB (tris(pentafluorophenyl)borane) or crown ethers.

Ideally, solvents used in a lithium air battery catholyte will show as many as possible of the following properties: stability against O₂₋derived radicals and other bases and nucleophiles (e.g. O₂²⁻ and Li₂O₂), low viscosity, high conductivity, high oxygen solubility and diffusion coefficient, high solubility of ions (especially Li⁺), a low vapor pressure avoiding too rapid evaporation in case of an open-battery system, reasonably low melting point, reasonably hydrophobic, allowing ideal product reaction, a good wettability of the cathode (and its components; various types of carbon, binder, etc.), good wettability of the separator and good wettability of other components of the battery, a large electrochemical window where the solvent is stable, and thermal stability. Concerning melting point, although solvents which are liquid at room temperature (about 20°C) are a preferred group of electrolyte solvents, it is envisaged that batteries according to the invention could be used at temperatures above room temperature. In addition, a solvent which is not liquid at room temperature, or at the temperature of use of the battery, could be used as part of the electrolyte medium in combination with another solvent which is liquid at room temperature, or at the temperature of use of the battery, such that the combination of solvent species is liquid at room temperature, or at the temperature of use of the battery.

Where the electrolyte medium of the lithium-air battery of the present invention is in the liquid phase, it is primarily constituted in mass terms by a continuous phase containing the liquid electrolyte solvent. The liquid electrolyte shows ionic conductivity (preferably Li⁺ ion conductivity).

Non-aqueous solvents used in a lithium-air battery anolyte of the present invention may be freely chosen among aprotic organic solvents known for use in lithium-ion batteries. Examples of such aprotic organic solvents include cyclic carbonates, chain carbonates, cyclic esters, cyclic ethers, and chain ethers. Examples of cyclic carbonates include ethylene carbonate (EC), propylene carbonate (PC), butylene carbonate, and vinylene carbonate. Examples of chain carbonates include dimethyl carbonate (DMC), diethyl carbonate (DEC), and ethyl methyl carbonate (EMC). Examples of cyclic ester carbonates include γ-butyrolactone and γ-valerolactone. Examples of cyclic ethers include tetrahydrofuran (THF) and 2-methyltetrahydrofuran. Examples of chain ethers include dimethoxyethane (DME) and ethylene glycol dimethyl ether, triethylene glycol dimethyl ether (TEDGE), tetraethylene glycol dimethyl ether (TEDGE). Nitrile solvents can also be used, such as propionitrile, and 3-methoxypropionitrile. Linear amides, lactams, or ureas also constitute possible non-aqueous solvents used in a lithium battery of the present invention. Such linear amides, lactams, or ureas may include: dimethylacetamide; N-methylpyrrolidone; tetramethylurea; tetraethylurea. These may be used separately or in combination as a mixture.

The most preferred solvents for the electrolyte, and specifically the anolyte in the present invention, are carbonates and their mixtures, and dimethoxyethane (DME). These solvents form a good solid electrolyte interface (SEI).

Non-aqueous solvents used in a lithium-air battery catholyte of the present invention may be freely chosen among aprotic organic solvents known for use in metal-air batteries such as lithium-air batteries. Examples of such aprotic organic solvents include cyclic ethers, and chain ethers. Examples of cyclic ethers include tetrahydrofuran (THF) and 2-methyltetrahydrofuran. Examples of chain ethers include dimethoxyethane (DME) and ethylene glycol dimethyl ether, triethylene glycol dimethyl ether (TEDGE), tetraethylene glycol dimethyl ether (TEDGE). Nitrile solvents can also be used, such as propionitrile, and 3-methoxypropionitrile. Linear amides, lactams, or ureas also constitute possible non-aqueous solvents to be used in the catholyte of a lithium battery of the present invention. Such linear amides, lactams, or ureas may include: dimethylacetamide; N-methylpyrrolidone; tetramethylurea; tetraethylurea. These may be used separately or in combination as a mixture.

Solvents from the sulfoxide family (R-SO-R'), for example dimethyl sulfoxide (DMSO), can also be used in the catholyte of a lithium air battery of the present invention.

The most preferred solvents for the electrolyte, and specifically for the catholyte, in the present invention, are dimethyl sulfoxide (DMSO), tetraethylene glycol dimethyl ether (TEDGE) and dimethoxyethane (DME).

An ionic liquid (IL) may be used in the electrolyte catholyte medium of the present invention, preferably a room temperature ionic liquid. Examples of such ILs are N-methyl-N-propyl piperidinium bis (trifluoromethane sulfonyl) imide (PP13TFSI), Ethyl Methyl Imidazolium (Trifluoromethane sulfonyl) imide (EMI)TFSI, and mixtures thereof. A preferred ionic liquid for the electrolyte, and specifically for the catholyte, in the present invention, is the quaternary ammonium type ionic liquid, N,N-diethyl-N-methyl-N-(2-methoxyethyl)ammonium bis(trifluoromethylsulfonyl)imide DEME-TFSI.

It may further be contemplated in the framework of the present invention to add an oxygen dissolution enhancer to the electrolyte medium. This oxygen dissolution enhancer may be a fluorinated polymer, a fluorinated ether, a fluorinated ester, a fluorinated carbonate, a fluorinated carbon material, a fluorinated blood substitute, or indeed a metalloprotein. Such oxygen dissolution enhancers are described in US 2010/0266907.

In a set of illustrative appropriate concentrations in the catholyte in the present invention, the following may be used
O₂ = 2 x 10⁻³ Molar
Li⁺ = 1 x 10⁻¹ Molar (corresponds only to the Li⁺ coming from Li⁺ salt, not Li⁺ coming from the anode)
M²⁺ = 0.25 x 10⁻⁶, 0.5 x 10⁻⁶ or 1x 10⁻⁶ Molar (e.g. Mn²⁺ or Co²⁺ cation as examples of M²⁺)

As mentioned above, in preferred embodiment of the additive comprising a transition metal salt combining transition metal M and anion/ligand Z is added to the catholyte part of the electrolyte only. By contrast, the anolyte may appropriately be based on a liquid electrolyte composed of a solvent and a Li⁺ salt, without the transition metal additive. It is also contemplated in the framework of the present invention to use an ionic liquid at the anode side, which is expected to promote Li metal plating and stripping while avoiding dendrites, or an electrolyte (solvent and salt) promoting the formation of a stable SEI. A gel polymer electrolyte may also be used at the anode side (e.g. in a configuration of the type shown in Figure 1b) and in such a case, the Li metal will be protected from metal salt contamination and migration at the anode side by this membrane (gel /polymer electrolyte). Another option to protect the Li metal from metal salt contamination is to place a Li⁺-conductive, electronically insulating ceramic, such as Li₇La₃Zr₂O₁₂ (garnet LLZO), Li₁₊ₓAlₓTi₂-ₓ(PO₄)₃ (Nasicon-type LATP), or Li_{1+x+3z}Alₓ(Ti,Ge)₂₋ₓ Si_{3z}P_{3-z}O₁₂ (Ohara glass) , between the Li metal anode and cathode (e.g. in a configuration of the type shown in Figure 1a) This is one of the options to eliminate the salt shuttling effect given that only Li⁺, and not the metal cations Mⁿ⁺, can be transported through these ceramics.

It may be beneficial to add to a Li-air battery catholyte in the present invention a boron ester of general formula Y-C((CH₂O)Z¹O)(Z²O))B, having some Lewis acidity properties which may help to dissolve partially or fully compounds like Li₂O₂ or Li₂O [cf. Shanmukaraj et al., JACS, 2010, 132, 3055-3062].

In the lithium-air battery of the present invention, in the configuration shown in Figure 1.0, a separator may be provided between the air cathode and the anode for complete electrical insulation between these electrodes. In the case of preferred configurations as shown in Figure 1a, 1b and 1c, the presence of a separator is not necessary. In the configuration of Figure 1c, where an anode protection layer is between the catholyte and the anode, a separator might further be added. The separator is not particularly limited in nature as long as it is able to electrically insulate the air cathode and the anode from each other and has a structure that allows the electrolyte to be present between the air cathode and the anode and specifically should be able to transport Li⁺ ions.

Examples of the separator include porous films and nonwoven fabrics comprising polyethylene, polypropylene, cellulose, polyvinylidene fluoride, glass ceramics, etc. Of these, a separator made of glass ceramics is preferred.

As the battery case for housing the lithium-air battery of the present invention, general battery cases for lithium-air batteries can be used. The shape of the battery case is not particularly limited as long as it can hold the above-mentioned air cathode, anode and electrolyte. Specific examples of the shape of the battery case include a coin shape, a flat plate shape, a cylindrical shape, a rectangular / prismatic shape and a laminate shape. It is possible for the battery of the present invention to be completely encased in an oxygen-permeable membrane, advantageously one which shows selectivity for oxygen diffusion over that of water or of carbon dioxide.

The lithium-air battery of the invention can discharge when an active material, which is oxygen, is supplied to the air cathode. Examples of oxygen supply source include the air and oxygen gas, and preferred is oxygen gas. The pressure of the supplied air or oxygen gas is not particularly limited and can be appropriately determined.

The shape of the lithium-air battery of the present invention is not particularly limited. Examples thereof include coin shapes, button shapes, sheet shapes, rectangular/prismatic shapes and laminate shapes. The lithium-air battery may have large shapes for use in electric cars and the like. Lithium-air batteries of the present invention can more generally be used in mobility applications (such as automotive, scooters and buses, robots, and drones) but also as stationary applications (such as electronic devices, storage devices and medical devices).

The lithium-air battery of the present invention may be used as a primary battery or a rechargeable secondary battery.

The lithium-air battery of the present invention may, for example, be put to practical use in a process wherein the battery is cycled between certain limits defined by initial and final voltage, or initial and final capacity or specific capacity. For example, one process for using a lithium-air battery of the present invention may consist of a process wherein:
(a) the lithium-air battery is provided in a fully charged state;
(b) the lithium-air battery is subjected to discharge until the specific capacity reaches a value X;
(c) the lithium-air battery is recharged;
(d) steps (b) and (c) are repeated.

The specific capacity value X selected may vary widely and, for example, be situated in the range of 200 to 10000 mAh/g (here expressed with respect to grammes (g) of particulate carbon). The specific capacity of a lithium-air battery may be determined by discharging up until 2 V. It may be appropriate during operation of the battery to cycle the battery within limits that do not go to full discharge or charge. It may be advantageous to cycle the battery between 10 % to 90% of its specific capacity (determined in step (b)), preferentially 20% to 80%, more preferably 20% to 70%. Cycling may also be carried out between certain limits of initial or maximum theoretical discharge capacity. Capacity-limited cycling may enable the cell to survive longer, and it may thus be appropriate to limit the cycling capacity to around 50% of the full discharge capacity.

The present invention, in one aspect, thus relates to a process of discharge of a lithium-air battery as described above wherein:
- oxygen gas O₂ is provided to the positive electrode; and
- a metal-oxide discharge product doped with transition metal M is produced.

During such as process, discharge products appear on the cathode/catholyte side of the battery. They may deposit inside the pores of the air cathode or on top of the cathode, or in the catholyte compartment, not necessarily in contact with the air cathode. In case the discharge deposit is on the top of the air cathode (for example, gold), detection of elements at ppm level can be done by ToF-SIMS (Time of Flight-Secondary Mass Ion Spectroscopy). If the discharge deposit is deposited in the catholyte compartment, it can be filtered to separate the solid phase from the liquid phase, and then analysed by ToF-SIMS to define the dopant amount.

Any combination of the above described elements in all possible variations thereof is encompassed by the invention unless otherwise indicated herein or otherwise clearly contradicted by context. Thus, all features and embodiments described herein in particular as applicable, advantageous or preferred in the context of the invention are to be construed as being applicable in combination with one another, in preferred embodiments of the invention.

### Examples

The following experimental examples are illustrative and enable the functioning of the invention to be understood. The scope of the invention is not limited to the specific embodiments described hereinafter.

### Example 1

### Synthesis of the additive Mn(Tf₂N)₂

Manganese(II) bis(trifluoromethylsulfonyl)imide, Mn(Tf₂N)₂, was synthesized by stirring a solution of manganese(II) oxide (1.00 g; 14.1 mmol) and hydrogen bis(trifluorosulfonyl)imide (80% solution in water) (9.91 g; 28.2 mmol) in water for 3 hours at 75 °C. The remaining solids were filtered off, subsequently the excess solvent was removed on a rotary evaporator and the product was dried at a vacuum line (100 - 200 Pa), resulting in Mn(Tf₂N)₂ with a melting point of 58 °C.

### Preparation of electrolyte solutions with various amount of additive

Stock solutions of 0.5 M and 0.5 mM Mn(Tf₂N)₂ were made by dissolving the salt in the solvent under investigation. From these stock solutions, dilutions were made to obtain the required concentration of the metal ion of interest. The LiTf₂N (IoLiTec) concentration was 0.1 M and was kept constant for all experiments.

### Electrochemical test procedure

4 electrodes were embedded in epoxy resin (see figure below), so that 4 different experiments can be carried out (all on a new and clean Au electrode surface) in one and the same electrolyte.

All experiments are performed at room temperature after 30 min of oxygen bubbling (> 99.9995 %). As counter electrode, a Pt coil is used and the real reference electrode is an Ag wire in a reference electrode tube filled with 0.1 M LiTf₂N + 0.01 M AgNO₃ in DMSO.

After each set of 4 experiments, the cell is disassembled and cleaned. The gold working electrodes are rinsed with water (in order to dissolve Li₂O₂) and cleaned in a HCl solution (in order to dissolve remaining oxides on the electrode), and subsequently the electrode is rinsed with water, ethanol and acetone and dried before reusing the electrode in a next set of experiments.

One set of experiments is the following:
1) CV: vertex potentials: +1.8 V <-> +4.1 V vs. Li⁺/Li, 10 cycles, 50 mV s⁻¹
2) Potentiostatic cycling: 10 s at 2.3 V vs. Li⁺/Li (discharge) and 300 s at +4.1 V vs. Li⁺/Li (charge), 1 cycle, surface pathway => layer formation (at this potential in DMSO)
3) Potentiostatic cycling: 10 s at 2.6 V vs. Li⁺/Li (discharge) and 300 s at +4.1 V vs. Li⁺/Li (charge), 1 cycle, solution pathway => particle formation (at this potential in DMSO)
4) Galvanostatic cycling: -100 µA cm⁻² with cut off at 2.0 V vs. Li⁺/Li (discharge) and +100 µA cm⁻² with cut off at 4.1 V vs. Li⁺/Li (charge)

### Example 2

### Synthesis of the additive Co(Tf₂N)₂

Synthesis of [Co(H₂O)₆][Tf₂N]₂ : To a stirred solution of HTf₂N (12.502 g of an 80 wt.% solution, 35.574 mmol) in water (50 ml) was added CoCO₃·xH₂O (2.737 g) and the mixture was stirred at room temperature until the pH was neutral. The mixture was then filtered to remove excess CoCO₃·xH₂O and the resulting red solution was concentrated on the rotary evaporator to give a wet red crystalline solid. The product was dried further on the vacuum line at 50 °C overnight to give [Co(H₂O)₆][Tf₂N]₂ as a pink crystalline solid. Yield: 10.065 g (13.837 mmol, 78 %). CHN found (calculated) for C₄H₁₂CoF₁₂N₂O₁₄S₄: C 6.64 (6.61) %, H 1.89 (1.66) %, N 3.76 (3.85). IR (ATR, v_{max/}cm⁻¹): 3492 (vO-H), 1636 (δH-O-H), (1348, 1312) (vₐS=O), 1196 (vₐC-F), 1129 (vS=O), 1038 (vₐS-N-S), 799 (vC-S), 770 (vₛS-N-S), 746 (δₛF-C-F), 614 (δₐO=S=O), (570, 511) (δₐF-C-F). The hydrated salt, Co(Tf₂N)₂.6H₂O can be dehydrated on a vacuum line at 120 °C to result in Co(Tf₂N)₂ which is used as a salt for the ensuing experiments.

### Preparation of electrolyte solutions with various amount of additive

Stock solutions of 0.5 M and 0.5 mM Co(Tf₂N)₂ were made by dissolving the salt in the solvent under investigation. From these stock solutions, dilutions were made to obtain the required concentration of the metal ion of interest. The LiTf₂N (IoLiTec) concentration was 0.1 M and was kept constant for all experiments.

### Electrochemical test procedure

All electrochemical experiments were performed in a three-electrode set-up at room temperature, using an Autolab 302N potentiostat controlled by NOVA 1.11.1 software. The electrochemical cell was filled and closed inside a glove box with oxygen and water content less than 1 ppm. Subsequently the cell was taken outside of the glove box and oxygen gas (>99.9995%, Air Liquid, ALPHAGAZ 2) was bubbled through the solution for 30 minutes prior to the electrochemical experiment. The bubbler was a glass tube with a P2 glass filter and was connected to the gas supply via silicon tubing and sent over a drying tower (Sigma-Aldrich). This drying tower was filled with activated molecular sieves 3 Å (beads, 4-8 mesh, Sigma-Aldrich). These molecular sieves were regularly reactivated in an oven at 250 °C under a flow of argon. As working electrode, a gold disk (0.6 mm diameter) was used. This electrode was embedded in epoxy resin and mirror shine polished. As counter electrode, a platinum coil was used and as reference electrode a home-made real reference was made. This was a silver wire (≥ 99.98 %, Chempur) in a glass tube filled with a solution of 0.01 M silver nitrate and 0.1 M lithium bis(trifluoromethylsulfonyl)imide in the corresponding solvent under investigation, and the glass tube was separated from the electrolyte by a glass frit. The reference tube was assembled at least 30 minutes prior to the electrochemical measurement. This experimental set-up was used to prove the concept of doping, in a model system chosen to avoid the possible problem of Mⁿ⁺ salt migrating at the Li metal anode (ref and /or CE). For real industrial applications, a battery configuration is recommended as shown schematically in Figures 1a, 1b or 1c as discussed herein. In the set-up here, a ½ cell is used where only the performances of the positive electrode are studied. In a full cell, there are 2 half cells (one ½ cell is the positive, the other ½ cell is the negative, this being Li which was not investigated in this study). In order to study the effect of doping only on the positive electrode performance, it is common and indeed generally preferred in the art to perform tests in a half cell. Such tests enable the effect of doping on the positive electrode performance to be distinguished e.g. from the effects of doping on the negative electrode. It is considered however, as understood by one skilled in the art, that proof of an effect on the positive electrode performance can fairly be extrapolated to favourable expected consequences for full cells.

## Claims

1. A lithium-air battery comprising:
- a negative electrode comprising a negative-electrode active material;
- a positive electrode capable of using oxygen as a positive-electrode active material; and
- at least one catholyte layer comprising a catholyte medium comprising a non-aqueous liquid phase solvent in contact with said positive electrode,
wherein the catholyte medium comprises a lithium salt and an additive in the form of a salt of a transition metal M, wherein:
M is selected from the group consisting of: Mn, Mo, Co, Ni, Cr, Fe, Cu, Zn, Zr, Nb, Ru, Ag, and
wherein the molar ratio M/Li in the catholyte medium is less than 0.1.

2. A lithium-air battery according to claim 1, wherein the molar ratio M/Li in the catholyte medium is less than 0.01, and preferably less than 0.001, and more preferably less than 0.0001.

3. A lithium-air battery according to claim 1 or 2, wherein the molar ratio M/Li in the catholyte medium is at least 10⁻⁶.

4. A lithium-air battery according to any of claims 1 to 3, wherein the concentration of lithium ions in the catholyte medium is between 0.02 and 1.5 M, preferably between 0.05 and 1.2 M, and more preferably from 0.1 to 0.5 M, most preferably from 0.1 to 0.3 M.

5. A lithium-air battery according to any of claims 1 to 4, wherein the concentration of metal ions M in the catholyte medium is between 0.1 and 10 µM.

6. A lithium-air battery according to any of claims 1 to 5, wherein the catholyte layer, on the side of the catholyte layer opposite the said positive electrode, is in contact with a solid lithium ion conductor, a polymer membrane or an anode protection layer.

7. A lithium-air battery according claim 6, wherein the catholyte layer, on the side of the catholyte layer opposite the said positive electrode, is in contact with a solid lithium ion conductor selected from the group consisting of: Li₇La₃Zr₂O₁₂ (garnet LLZO), Li₁₊ₓAlₓTi₂-ₓ(PO₄)₃ (Nasicon-type LATP), Li_{1+x+y}Al,Ti₂₋ₓSi_{y}P₃-yO₁₂, LiSICON (Li₂₊₂ₓZn₁₋ₓGeO₄), Li_{1+x+3z}Alₓ(Ti,Ge)₂₋ₓSi_{3z}P_{3-z}O₁₂ (Ohara glass).

8. A lithium-air battery according claim 6, wherein the catholyte layer, on the side of the catholyte layer opposite the said positive electrode, is in contact with a polymer membrane comprising polyethylene oxide (PEO) and Li⁺ salts.

9. A lithium-air battery according claim 6, wherein the catholyte layer, on the side of the catholyte layer opposite the said positive electrode, is in contact with an anode protection layer, and further wherein the anode is lithium metal and the anode protection layer deposited thereupon is LIPON or LISICON, and/or the anode and anode protection layer constitute a lithium-protected electrode (LPE).

10. A lithium-air battery according to any of claims 1 to 9, wherein the transition metal M is Mn.

11. A lithium-air battery according to any of claims 1 to 9, wherein the transition metal M is Mo.

12. A lithium-air battery according to any of claims 1 to 9, wherein the transition metal M is Co.

13. A lithium-air battery according to any of claims 1 to 12, wherein the salt of transition metal M contains an anion Z that is selected from the group consisting of: TFSI⁻, FSI⁻, BOB⁻, PF₆⁻, BF₄⁻, and ClO₄⁻.

14. A lithium-air battery according to any of claims 1 to 13, wherein the additive in the catholyte medium is a bis(trifluoromethylsulfonyl)imide salt of manganese or cobalt.

15. A lithium-air battery according to any of claims 1 to 14, wherein the catholyte medium contains DMSO, or DME (= monoglyme), or diglyme or DEME-TFSI or DEME-FSI or PP13TFSI or PP13FSI (PP13 is N-methyl-N-propylpiperidinium cation) or a mixture of these.

16. Process of discharge of a lithium-air battery according to any of claims 1 to 15 wherein:
- oxygen gas O₂ is provided to the positive electrode; and
- a metal-oxide discharge product doped with transition metal M is produced.

17. Process of discharge of a lithium-air according to claim 16 wherein the oxygen gas is supplied as purified oxygen, or in air or dried air.

18. A metal-oxide discharge product doped with transition metal M obtained through a process of discharge according to claim 16 or 17.

## Patentansprüche

1. Lithium-Luft-Batterie, umfassend:
- eine negative Elektrode, die ein Negativ-Elektroden-Aktivmaterial umfasst,
- eine positive Elektrode, die in der Lage ist, Sauerstoff als ein Positiv-Elektroden-Aktivmaterial zu verwenden, und
- mindestens eine Katholytschicht, die ein Katholytmedium umfasst, das ein nichtwässriges Flüssigphasenlösungsmittel in Kontakt mit der positiven Elektrode umfasst,
wobei das Katholytmedium ein Lithiumsalz und ein Additiv in der Form eines Salzes eines Übergangsmetalls M umfasst, wobei:
M ausgewählt ist aus der Gruppe bestehend aus: Mn, Mo, Co, Ni, Cr, Fe, Cu, Zn, Zr, Nb, Ru, Ag, und
wobei das Molverhältnis M/Li in dem Katholytmedium weniger als 0,1 beträgt.

2. Lithium-Luft-Batterie nach Anspruch 1, wobei das Molverhältnis M/Li in dem Katholytmedium weniger als 0,01 und bevorzugt weniger als 0,001 und bevorzugter weniger als 0,0001 beträgt.

3. Lithium-Luft-Batterie nach Anspruch 1 oder 2, wobei das Molverhältnis M/Li in dem Katholytmedium mindestens 10⁻⁶ beträgt.

4. Lithium-Luft-Batterie nach einem der Ansprüche 1 bis 3, wobei die Konzentration der Lithiumionen in dem Katholytmedium zwischen 0,02 und 1,5 M, bevorzugt zwischen 0,05 und 1,2 M liegt und bevorzugter von 0,1 bis 0,5 M, am meisten bevorzugt von 0,1 bis 0,3 M beträgt.

5. Lithium-Luft-Batterie nach einem der Ansprüche 1 bis 4, wobei die Konzentration der Metallionen M in dem Katholytmedium zwischen 0,1 und 10 µM liegt.

6. Lithium-Luft-Batterie nach einem der Ansprüche 1 bis 5, wobei die Katholytschicht auf der Seite der Katholytschicht gegenüber der positiven Elektrode in Kontakt mit einem festen Lithiumionenleiter, einer Polymermembran oder einer Anodenschutzschicht ist.

7. Lithium-Luft-Batterie nach Anspruch 6, wobei die Katholytschicht auf der Seite der Katholytschicht gegenüber der positiven Elektrode in Kontakt mit einem festen Lithiumionenleiter ist, der ausgewählt ist aus der Gruppe bestehend aus: Li₇La₃Zr₂O₁₂ (LLZO-Granat), Li₁₊ₓAlₓTi₂₋ₓ(PO₄)₃ (LATP vom Nasicon-Typ), Li_{1+x+y}AlₓTi₂₋ₓSi_{y}P₃-_{y}O₁₂, LISICON (Li₂₊₂ₓZn₁₋ₓGeO₄), Li_{1+x+3z}Alₓ(Ti,Ge)₂₋ₓSi_{3z}P_{3-z}O₁₂ (Ohara-Glas).

8. Lithium-Luft-Batterie nach Anspruch 6, wobei die Katholytschicht auf der Seite der Katholytschicht gegenüber der positiven Elektrode in Kontakt mit einer Polymermembran ist, die Polyethylenoxid (PEO) und Li⁺-Salze umfasst.

9. Lithium-Luft-Batterie nach Anspruch 6, wobei die Katholytschicht auf der Seite der Katholytschicht gegenüber der positiven Elektrode in Kontakt mit einer Anodenschutzschicht ist, und wobei ferner die Anode Lithiummetall ist und die darauf abgeschiedene Anodenschutzschicht LIPON oder LISICON ist und/oder die Anode und die Anodenschutzschicht eine lithiumgeschützte Elektrode (LPE) bilden.

10. Lithium-Luft-Batterie nach einem der Ansprüche 1 bis 9, wobei das Übergangsmetall M Mn ist.

11. Lithium-Luft-Batterie nach einem der Ansprüche 1 bis 9, wobei das Übergangsmetall M Mo ist.

12. Lithium-Luft-Batterie nach einem der Ansprüche 1 bis 9, wobei das Übergangsmetall M Co ist.

13. Lithium-Luft-Batterie nach einem der Ansprüche 1 bis 12, wobei das Salz des Übergangsmetalls M ein Anion Z enthält, das ausgewählt ist aus der Gruppe bestehend aus: TFSF⁻, FSI⁻, BOB⁻, PF₆⁻, BF₄⁻ und ClO₄⁻.

14. Lithium-Luft-Batterie nach einem der Ansprüche 1 bis 13, wobei das Additiv in dem Katholytmedium ein Bis(trifluormethylsulfonyl)imid-Salz von Mangan oder Kobalt ist.

15. Lithium-Luft-Batterie nach einem der Ansprüche 1 bis 14, wobei das Katholytmedium DMSO oder DME (= Monoglyme) oder Diglyme oder DEME-TFSI oder DEME-FSI oder PP13TFSI oder PP13FSI (PP13 ist das N-Methyl-N-propylpiperidiniumkation) oder ein Gemisch davon enthält.

16. Verfahren zur Entladung einer Lithium-Luft-Batterie nach einem der Ansprüche 1 bis 15, wobei:
- die positive Elektrode mit Sauerstoffgas O₂ versorgt wird, und
- ein mit Übergangsmetall M dotiertes Metalloxid-Entladungsprodukt hergestellt wird.

17. Verfahren zur Entladung einer Lithium-Luft-Batterie nach Anspruch 16, wobei das Sauerstoffgas als gereinigter Sauerstoff oder in Luft oder getrockneter Luft bereitgestellt wird.

18. Mit Übergangsmetall M dotiertes Metalloxid-Entladungsprodukt, das durch ein Verfahren zur Entladung nach Anspruch 16 oder 17 erhalten ist.

## Revendications

1. Accumulateur au lithium-air comprenant :
- une électrode négative comprenant une matière active d'électrode négative ;
- une électrode positive capable d'utiliser de l'oxygène comme une matière active d'électrode positive ; et
- au moins une couche de catholyte comprenant un milieu de catholyte comprenant un solvant en phase liquide non-aqueuse en contact avec ladite électrode positive,
dans lequel le milieu de catholyte comprend un sel de lithium et un additif dans la forme d'un sel d'un métal de transition M, dans lequel :
M est choisi dans le groupe consistant en : Mn, Mo, Co, Ni, Cr, Fe, Cu, Zn, Zr, Nb, Ru, Ag, et
dans lequel le rapport molaire M/Li dans le milieu de catholyte est inférieur à 0,1.

2. Accumulateur au lithium-air selon la revendication 1, dans lequel le rapport molaire M/Li dans le milieu de catholyte est inférieur à 0,01, et de préférence inférieur à 0,001, et encore mieux inférieur à 0,0001.

3. Accumulateur au lithium-air selon la revendication 1 ou 2, dans lequel le rapport molaire M/Li dans le milieu de catholyte est d'au moins 10⁻⁶.

4. Accumulateur au lithium-air selon l'une quelconque des revendications 1 à 3, dans lequel la concentration en ions lithium dans le milieu de catholyte est de 0,02 à 1,5 M, de préférence de 0,05 à 1,2 M, et encore mieux de 0,1 à 0,5 M, bien mieux encore de 0,1 à 0,3 M.

5. Accumulateur au lithium-air selon l'une quelconque des revendications 1 à 4, dans lequel la concentration en ions de métal M dans le milieu de catholyte est de 0,1 à 10 µM.

6. Accumulateur au lithium-air selon l'une quelconque des revendications 1 à 5, dans lequel la couche de catholyte, sur le côté de la couche de catholyte opposée à ladite électrode positive, est en contact avec un conducteur d'ion lithium solide, une membrane polymère ou une couche de protection d'anode.

7. Accumulateur au lithium-air selon la revendication 6, dans lequel la couche de catholyte, sur le côté de la couche de catholyte opposée à ladite électrode positive, est en contact avec un conducteur d'ion lithium solide choisi dans le groupe consistant en : Li₇La₃Zr₂O₁₂ (grenat LLZO), Li₁₊,AlₓTi₂,(PO₄)₃ (LATP type-Nasicon), Li_{1+x+y}AlₓTi₂₋ₓSi_{y}P_{3-y}O₁₂, LiSICON (Li₂₊₂ₓZn₁₋ₓGeO₄), Li_{1+x+3z}Alₓ(Ti,Ge)₂₋ₓSi_{3z}P₃-_{z}O₁₂ (verre Ohara).

8. Accumulateur au lithium-air selon la revendication 6, dans lequel la couche de catholyte, sur le côté de la couche de catholyte opposée à ladite électrode positive, est en contact avec une membrane polymère comprenant du poly(oxyde d'éthylène) (PEO) et des sels de Li⁺.

9. Accumulateur au lithium-air selon la revendication 6, dans lequel la couche de catholyte, sur le côté de la couche de catholyte opposée à ladite électrode positive, est en contact avec une couche de protection d'anode, et de plus dans lequel l'anode est un métal de lithium et la couche de protection d'anode déposée sur celle-ci est LIPON ou LISICON, et/ou les anode et couche de protection d'anode constituent une électrode protégée par du lithium (LPE).

10. Accumulateur au lithium-air selon l'une quelconque des revendications 1 à 9, dans lequel le métal de transition M est Mn.

11. Accumulateur au lithium-air selon l'une quelconque des revendications 1 à 9, dans lequel le métal de transition M est Mo.

12. Accumulateur au lithium-air selon l'une quelconque des revendications 1 à 9, dans lequel le métal de transition M est Co.

13. Accumulateur au lithium-air selon l'une quelconque des revendications 1 à 12, dans lequel le sel de métal de transition M contient un anion Z qui est choisi dans le groupe consistant en : TFSI⁻, FSI⁻, BOB⁻, PF₆⁻, BF₄⁻, et ClO₄⁻.

14. Accumulateur au lithium-air selon l'une quelconque des revendications 1 à 13, dans lequel l'additif dans le milieu de catholyte est un sel de bis(trifluorométhylsulfonyl)imide de manganèse ou cobalt.

15. Accumulateur au lithium-air selon l'une quelconque des revendications 1 à 14, dans lequel le milieu de catholyte contient DMSO, ou DME (= monoglyme), ou diglyme ou DEME-TFSI ou DEME-FSI ou PP13TFSI ou PP13FSI (PP13 est le cation de N-méthyl-N-propylpipéridinium) ou un mélange de ceux-ci.

16. Procédé de décharge d'un accumulateur au lithium-air selon l'une quelconque des revendications 1 à 15 dans lequel :
- du gaz d'oxygène O₂ est fourni à l'électrode positive ; et
- un produit de décharge d'oxyde de métal dopé avec le métal de transition M est produit.

17. Procédé de décharge d'un accumulateur au lithium-air selon la revendication 16, dans lequel le gaz d'oxygène est introduit comme oxygène purifié, ou dans de l'air ou air séché.

18. Produit de décharge d'oxyde de métal dopé avec le métal de transition M obtenu par un procédé de décharge selon la revendication 16 ou 17.
